# EUROPÄISCHE PATENTSCHRIFT

(11) **EP 3 135 898 B1**
(45) Veröffentlichungstag und Bekanntmachung des Hinweises auf die Patenterteilung: **18.04.2018**
(21) Anmeldenummer: 16177871.7
(22) Anmeldetag: 05.07.2016
(51) Int. Cl.: F02M 55/00, F16L 15/00, F16L 21/04, G01L 1/00

(54) **DICHTUNGSANORDNUNG FÜR EINE KRAFTSTOFFZULEITUNG**
SEALING ASSEMBLY FOR A FUEL LINE
SYSTEME D'ETANCHEIFICATION D'ALIMENTATION EN CARBURANT

(30) Priorität: 25.08.2015 DE 102015216150
(43) Veröffentlichungstag der Anmeldung: 01.03.2017
(73) Patentinhaber: Volkswagen Aktiengesellschaft, 38440 Wolfsburg (DE)
(72) Erfinder: Hartung, Henry, 38114 Braunschweig (DE); Janke, André, 38179 Groß Schwülper (DE)

(56) Entgegenhaltungen:
- EP-A1- 1 316 720
- DE-A1- 19 547 890
- US-A- 5 855 397

## Beschreibung

Die Erfindung betrifft eine Dichtungsanordnung für eine Kraftstoffzuleitung, insbesondere eine Verteilerleitung für mehrere Einspritzventile einer Brennkraftmaschine, welche mindestens ein ringförmiges Dichtelement aufweist.

Es ist aus DE 44 13 863 A1 eine Dichtungsanordnung für den Anschluss eines Ventils zur Kraftstoffeinspritzung in Verbrennungsmotoren, ein ringförmiges elastomeres Dichtungselement aufweisend, bekannt. Das Dichtungselement liegt verbindend sowohl an einer radial äußeren Ringfläche eines Ventilgehäuses als auch an der koaxial angeordneten Abzweigung unter radialer Vorspannung an und kann dort bei kälteren Temperaturen aufschrumpfen und eine Leckage verhindern. Die Dichtungsanordnung ist insbesondere für kältere Temperaturen geeignet, da bei Temperaturen von unter -40°C die Quellung eines O-Ringes durch den Kraftstoff nicht mehr ausreicht, um eine Leckage zu verhindern.

Weiterhin ist aus DE 28 17 438 A1 ein Ring bekannt, der durch einen Presssitz radial außen an einer Fläche am Ende einer Innengewindebohrung gehalten ist und somit der Abdichtung einer Rohrverschraubung dient. Beim Anziehen der Rohrverschraubung wird ein unterer Teil eines Rohres ein wenig verformt, wodurch eine feste Anlage erzielt werden kann. Insgesamt besteht die Anordnung aus einem Innengewindeteil, einer Schraube, einem Rohr und dem Ring. Bei einer derart ausgebildeten Rohrverschraubung wird durch die relative Weichheit des Ringes eine dichtende Anlage zwischen zwei Dichtflächen dadurch erreicht, dass eine der beiden Dichtflächen im Bedarfsfall etwas plastisch deformiert werden kann und so eine Anpassung an eventuelle Unebenheiten möglich ist. Diese Zuverlässigkeit dieser Rohrverschraubung ist im Bereich von ca. 5 bar gegeben.

Die DE 195 47 890 A1 zeigt eine Dichtungsanordnung für einen Kraftstoffdrucksensor, bei welcher ein eine Dichtungsscheibe zentrierender und kraft- und/oder formschlüssig fixierender Zapfen an einem gewindebolzenförmigen Ende eines Sensorgehäuses angeordnet ist. Vorzugsweis ist der Zapfen länger als die Dicke der Dichtungsscheibe, sodass durch Festziehen des Kraftstoffdrucksensors die Dichtungsscheibe axial verdichtet wird, sodass eine kraftschlüssige Verbindung zwischen dem Zapfen und der Bohrung der Dichtungsscheibe zumindest verstärkt wird.

Aus US 5,855,397 A ist eine Hochdruckverbindung bekannt, welche ein Innenelement, ein Außenelement und eine zwischen dem Innen- und dem Außenelement komprimierbare ringförmige Dichtungsscheibe aufweist. Die Dichtungsscheibe ist von einer radial inneren Zone weg plastisch verformt, wobei diese radial innere Zone von einer elastischen Zone umgeben ist, sodass eine Verdrängung des Dichtungsscheibenmaterials wirksam verhindert ist.

Das Hauptaugenmerk der heutigen Entwicklung von Verbrennungsmotoren und deren Komponenten, bspw. von Kraftstoffhochdruckverteilerleitungen, liegt in der Verbesserung der Motorlaufeigenschaften sowie einer Reduzierung der Partikelemissionen und Stickoxidbildung. Durch den unter Druck stehenden eingespritzten Kraftstoff in den Brennraum wird der Kraftstoff sehr fein zerstäubt, was zu einer vollständigeren schnelleren Verbrennung und dadurch zu einer geringeren Partikelmasse im Abgas führt. Je höher der Druck an einer Kraftstoffhochdruckverteilerleiste desto feiner kann der Kraftstoff zerstäubt und damit die Partikelemissionen reduziert werden. In einer Kraftstoffhochdruckverteilerleiste der sogenannten ersten Generation lagen die erwarteten Einspritzdrücke bereits bei etwa 1350 bar. Bei höheren Drücken der heutigen Kraftstoffhochdruckverteilerleitungen ist die Zuverlässigkeit der Rohrverschraubung aus dieser Schrift bei weitem nicht mehr gegeben.

Der begrenzende Faktor für die Bereitstellung der gewünschten hohen Einspritzdrücke liegt in der Abdichtung der Verbindungen zwischen den einzelnen Hochdruckbauteilen gegen die Umgebung. Neben der Abdichtung des Verteilerleiste an die Kraftstoffleitungen bzw. die Injektoren muss auch ein Drucksensor, welcher zu jeder Zeit den aktuellen Druck mit ausreichender Genauigkeit (max. ±2% im Hauptbetriebsbereich) als Spannungssignal an die Motorsteuerung meldet, gegen die Umgebung abgedichtet werden. Eine Leckage am Drucksensor führt zu einer ungenauen Rückmeldung an das Motorsteuergerät und so zu einer nicht am optimalen Betriebspunkt stattfindenden Verbrennung und somit zu einer höheren Partikel- und Stickstoffemission. Somit kann auch die Betriebssicherheit nicht mehr vollständig gewährleistet werden.

Die Festigkeiten der Werkstoffe der im Allgemeinen bekannten Abdichtungen, sogenannte Beißkanten von Anbauteilen, reichen nicht mehr vollständig an die Festigkeiten des höchstfesten Materials der Kraftstoffzuleitungen heran. Im Betrieb bei einer Belastung der Beißkante von ca. 3000 bar und mehr verliert die Beißkante den Kontakt, weswegen der Werkstoff deutlich härter gewählt werden muss, als das Grundmaterial der Kraftstoffzuleitung. Dies dient ebenfalls dem Ausgleichen etwaiger geometrischer Ungenauigkeiten, die aus dem Herstellprozess bedingt sind.
Die bisher eingesetzten Dichtelemente, vorzugsweise Dichtscheiben, stellen hierbei hinsichtlich Maßhaltigkeit und Zentrierbarkeit eine Herausforderung dar. Weiterhin führt die relative Weichheit der Dichtscheiben zu unkontrollierbaren und unzulässig hohen radialen und axialen Verformungen.
Die in dieser konventionellen Anordnung auftretenden sehr hohen Drücke bei der Autofrettage der sehr weichen Dichtscheibe, können zu Mikrorissen an der Oberfläche der Innenbohrung führen, sodass die Dauerhaltbarkeit der Bauteile gesenkt ist und die Dichtigkeit unter Umständen nicht mehr vollständig gewährleistet ist, somit muss bei der Herstellung der Dichtscheiben in einem aufwendigen Herstellungsprozess sehr genau gearbeitet werden.

Der Erfindung liegt die Aufgabe zugrunde eine Dichtungsanordnung einer Kraftstoffzuleitung, insbesondere eine Kraftstoffhochdruckverteilerleitung, für steigende Einspritzdruckanforderungen derart zu verbessern, dass die Anbauteile, beispielsweise ein Drucksensor, wirksam gegen die Umgebung abgedichtet sind.

Die Aufgabe wird erfindungsgemäß durch die Merkmale des Patentanspruchs 1 gelöst.
Die erfindungsgemäße Dichtungsanordnung weist eine Aufnahme eines Anbauteiles an einer Kraftstoffzuleitung, insbesondere einer Kraftstoffhochdruckverteilerleitung, und ein Anbauteil, insbesondere einen Drucksensor, sowie ein Dichtelement auf. Die Aufnahme des Anbauteiles weist eine Bohrung auf, die am innersten Ende konisch zuläuft, sodass sich Ihre Grundfläche allmählich verringert.
Das Anbauteil weist in seiner Axialrichtung einen Stutzen und ein, an dessen äußersten Ende befindlichen, radial umlaufenden axialen Vorsprung auf. Innerhalb des Vorsprungs und daran radial anliegend ist ein Dichtelement angeordnet. Durch die Anlage des Dichtelementes an dem Vorsprung kann dieses nicht nach außen hin ausweichen. In vorteilhafter Weise ist das Dichtelement in Axialrichtung länger als der Vorsprung des Anbauteiles. Das Dichtelement kann somit im Betrieb nicht arbeiten bzw. nach außen ausweichen und stützt sich in Umfangsrichtung an dem Vorsprung ab.
Der konisch zulaufende Bohrungsgrund der Aufnahme steht mit dem Anbauteil in Kontakt, vorzugsweise unter einer Vorspannkraft von 30 bis 40 kN sodass sich der Vorsprung an der Aufnahme abstützt. Eine vorteilhafte Abdichtung wird erreicht, wenn die Aufnahme und das Anbauteil derart angeordnet sind, dass im Zusammenbau der Durchmesser des Vorsprunges des Anbauteiles kleiner ist, als der Durchmesser der Aufnahme an der Stelle, an der der Vorsprung anliegt.
Es ergibt sich eine dichtende Anlage, da sich das Dichtelement gegen den Vorsprung und im Weiteren der Vorsprung gegen die Aufnahme abstützt und dichtend anliegt. Es kann somit auf eine zusätzliche herkömmliche Dichtscheibe verzichtet werden.
Die erfindungsgemäße Dichtungsanordnung kann durch die kennzeichnenden Merkmale der Unteransprüche ausgestaltet werden, womit die Ausgestaltungsmöglichkeiten jedoch nicht erschöpft sind.
Die Erfindung beruht weiterhin auf der Erkenntnis der Autofrettage, wobei die Dauerfestigkeit der erfindungsgemäßen Bauteile erhöht wird. Erfindungsgemäß induziert die Kombination der erwünschten plastischen Verformung des Vorsprungs des Anbauteiles mit der elastischen radialen und axialen Verformung des Dichtelementes in dem Dichtelement Druckeigenspannungen. Diese Druckeigenspannungen wirken den im Betrieb der Kraftstoffzuleitung an der Randfaser auftretenden Zugspannungsspitzen bzw. Pulsationen im Dichtelement entgegen, sodass die Zugspannungsspitzen zumindest teilweise kompensiert werden.
In vorteilhafter Weise weist der Stutzen des Anbauteiles ein Außengewinde und die Aufnahme ein Innengewinde auf, sodass das Anbauteil mit der Aufnahme verschraubbar ist. Die erfindungsgemäße Ausgestaltung wirkt einer Verformung des Dichtelementes während der Verschraubung entgegen. Die tragende Außengewindestruktur unterstützt in vorteilhafter Weise den Autofrettageeffekt und ist eine sehr einfache und kostengünstige Herstell- und Montagemöglichkeit. Weiter ist es vorteilhaft, dass der Stutzen in seiner Axialrichtung kürzer ist als die Aufnahme, da hierbei eine Doppelpassung des Stutzens und so ein Ausgleichen der gewollten induzierten Eigenspannungen vermieden wird.
In einer vorteilhaften erfindungsgemäßen Erweiterung erstreckt sich die auf dem Stutzen eingebrachte Außengewindestruktur nicht über die gesamte axiale Länge des Stutzen, sondern ist nur in den oberen Teil eingebracht und so zu dem Vorsprung beabstandet.
Der Stutzen des Anbauteiles kann vorteilhaft an seinem äußeren Ende und zu dem Außengewinde beabstandet eine radiale Ausprägung, insbesondere eine radiale Wulst, zur wirkungsvolleren Abdichtung aufweisen. Die radiale Wulst ist idealerweise ringförmig und einteilig mit dem Stutzen ausgebildet, was den Herstellaufwand erheblich reduziert und die Dichtigkeit der Anordnung verbessert.

Eine alternative Ausführungsform sieht vor, dass die radiale Ausprägung des Stutzens als konische Fläche entgegengesetzt zu der konisch Fläche der Aufnahme ausgeführt ist. Der Durchmesser der radialen Ausprägung nimmt zum äußeren Ende des Stutzens hin zu, während der Durchmesser der Aufnahme weiterhin konischen nach innen abnimmt.

In einer vorteilhaften Weiterbildung der Erfindung liegt die Zugfestigkeit der Kraftstoffhochdruckleitung, mit vorzugsweise etwa 1350 N/mm², oberhalb der Zugfestigkeit des Anbauteils, die vorzugsweise bei etwa 1200 N/mm² liegt. Dies kann über unterschiedliche Werkstoffauswahl erreicht werden. Vorteilhafter Weise wird für die Kraftstoffhochdruckleitung eine Stahllegierung für höherfeste Schmiedebauteile gewählt.

Die Erfindung lässt zahlreiche Ausführungsformen zu, die ebenfalls unter den Schutzbereich fallen. Zur weiteren Verdeutlichung ihres Grundprinzips ist eine bevorzugte Ausführungsform in den Figuren dargestellt und wird nachfolgend beschrieben.

Es zeigen
- Fig. 1: eine erfindungsgemäße Ausführungsform eines Anbauteiles
- Fig. 2: eine erfindungsgemäße Ausführungsform einer Hochdruckseite einer Kraftstoffzuleitung
- Fig. 3: schematische Darstellung eines Zusammenbaus des Anbauteiles aus Fig. 1 und der Kraftstoffzuleitung aus Fig. 2
- Fig. 4: das bevorzugte Ausführungsbeispiel aus Fig. 3 in einer Detailansicht
- Fig. 5: ein weiteres erfindungsgemäßes Ausführungsbeispiel des Anbauteiles

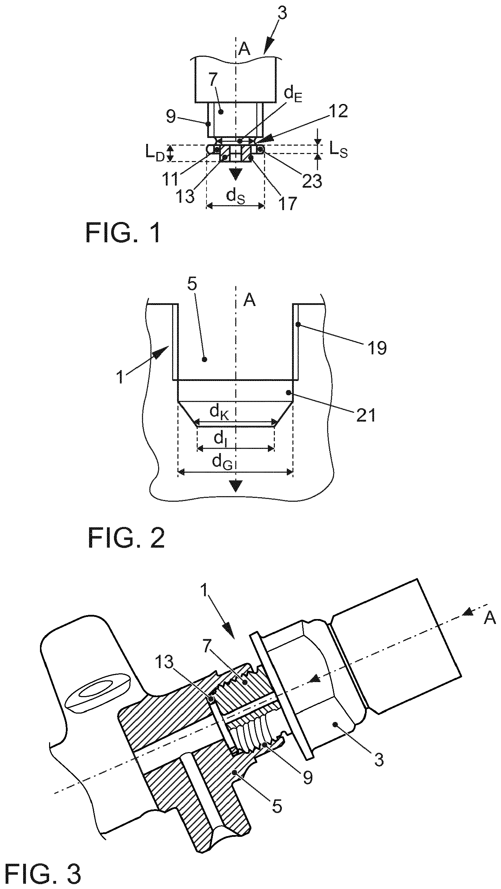

Gemäß einer in den Figuren 1 bis 5 dargestellten Axialrichtung A weist die Erfindung ein Anbauteil 3, insbesondere einen Drucksensor, ein Dichtelement 13 und eine Aufnahme 5 für das Anbauteil 3 an einer Hochdruckseite einer Kraftstoffzuleitung 1 auf.
Die Beschaffenheit dieser Bestandteile und ihr Zusammenwirken werden nachfolgend genauer beschrieben:
An den Drucksensor 3, gemäß Fig. 1, ist in Bezug auf die Axialrichtung A ein Stutzen 7 angeformt. Auf dem Stutzen 7 ist in Bezug auf die Axialrichtung A im oberen Teil ein Außengewinde 9 angeformt, sowie daran anschließend eine Einschnürung 12 mit dem Durchmesser *d_{E}* und ein ringförmiger axialer Vorsprung 11. Der Vorsprung 11 weist weiterhin eine radiale Ausprägung 23, insbesondere als Stauchwulst ausgebildet, mit einem Durchmesser *d_{S}* und eine innere Ringfläche 15 einer Länge *L_{S}* auf, welche teilweise in Kontakt mit einer äußeren Ringfläche 17 aufweisend eine Länge *L_{D}* des Dichtelementes 13 steht. Die Abmessung *L_{D}* des Dichtelementes 13 ist in Axialrichtung A größer, als die Länge der inneren Ringfläche 15 des Vorsprungs *L_{S}*. Der Durchmesser *d_{S}* der Stauchwulst 23 ist vorzugsweise kleiner als der Außengewindedurchmesser des Außengewindes 9.

Die Kraftstoffzuleitung 1, wie dargestellt in Fig. 2, weist die, insbesondere als Innenbohrung ausgebildete, Aufnahme 5 auf, in die mit Bezug zur Axialrichtung A ein Innengewinde 19 eingebracht ist. Das Innengewinde 19 geht in eine Bohrung 21 über, deren Durchmesser *d_{G}* in Axialrichtung A zunächst konstant ist und anschließend zu einem Bohrungsgrunddurchmesser *d_{I}* hin abnimmt. Ein Durchmesser im Bereich zwischen dem Durchmesser *d_{G}* der Bohrung 21 und dem Bohrungsgrunddurchmesser *d_{I}* ist mit *d_{K}* bezeichnet.

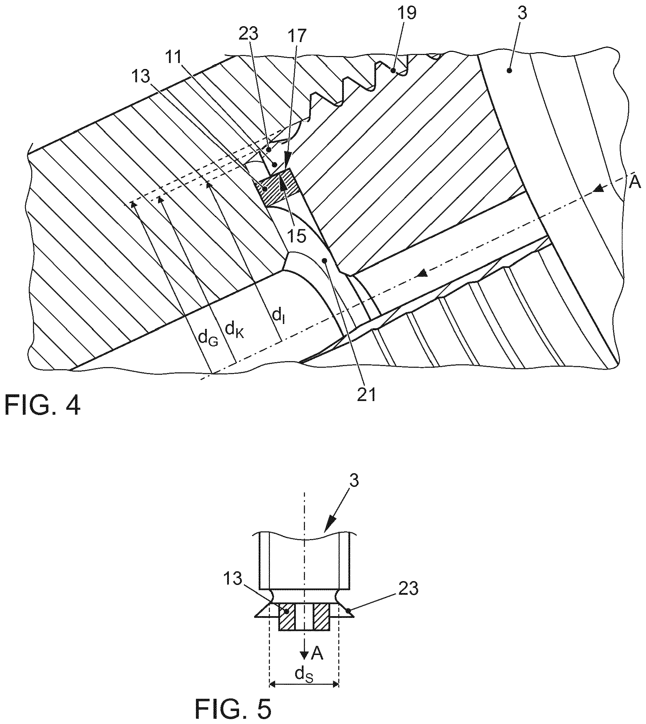

Die in den Fig. 3 und 4 dargestellte Einbaulage zeigt den Drucksensors 3 in der Aufnahme 5 der Kraftstoffhochdruckleitung 1. Der Drucksensor 3 ist in Axialrichtung A über ein Außengewinde 9 auf dem Stutzen 7 in das Innengewinde 19 der Aufnahme 5 eingeschraubt. Die Aufnahme 5 der Kraftstoffhochdruckleitung 1 weist zu dem Innengewinde 19 beabstandet innerhalb der Bohrung 21 eine Verringerung des Durchmessers auf. Der Durchmesser der Bohrung *d_{G}* nimmt zu einem Bohrungsgrunddurchmesser *d_{I}* hin ab, wobei sich der mittlere Durchmesser *d_{K}* an der Kontaktstelle zwischen der Stauchwulst 23 und der Bohrung 21 befindet. Durch den im Ausgangszustand gemäß Fig. 1 größeren Durchmesser *d_{S}* der Stauchwulst 23 im Vergleich zu dem kleineren Durchmesser *d_{K}* der Bohrung 21 gemäß Fig. 2 ist die Stauchwulst 23 in der dargestellten Einbaulage plastisch verformt, wodurch Eigenspannungen in den Bauteilen induziert werden.
Das Dichtelement 13 ist innerhalb des Vorsprungs 11 angeordnet, wobei sich die radial äußere Ringfläche 17 des Dichtelementes 13 mit der radial inneren Ringfläche 15 des Vorsprungs 11 des Stutzen 7 des Drucksensors 3 in Kontakt befindet. In Axialrichtung ist das Dichtelement weiter zwischen dem Bohrungsgrund der Aufnahme 5 und dem Stutzen 7 verpresst, sodass der Dichtring 13 elastisch verformt und dadurch mechanisch frettiert ist.
Die durch die Verformung der Stauchwulst 23 und des Dichtelements 13 induzierten Eigenspannungen wirken den im Betrieb auftretenden hohen Drücken entgegen, sodass die Belastung für die Bauteile deutlich reduziert wird.

Fig. 5 zeigt ein weiteres Ausführungsbeispiel der radialen Ausprägung 23 des Anbauteiles 3, wobei die radiale Ausprägung 23 in dieser Ausführungsform konisch geformt ist. Der Durchmesser *d_{S}* der Ausprägung 23 wird mit Bezug zur Axialrichtung A von dem Durchmesser der Einschnürung 12 nach außen hin größer, sodass sich eine gegenkonische Fläche zur Bohrung 21 gemäß Fig. 2 ergibt.

Die in den Fig. 1 und 5 dargestellten Ausführungsformen sind nicht abschließend. Es sind weitere Ausführungsformen denkbar.

### Bezugszeichenliste

- 1: Kraftstoffzuleitung
- 3: Drucksensor
- 5: Aufnahme
- 7: Stutzen
- 9: Außengewinde
- 11: Vorsprung
- 12: Einschnürung
- 13: Dichtelement
- 15: innere Ringfläche
- 17: äußere Ringfläche
- 19: Innengewinde
- 21: Bohrung
- 23: radiale Ausprägung/ Stauchwulst
- *d_{K}*: Durchmesser *d_{I}* ≤ *d_{K}* ≤ *d_{G}*
- *d_{S}*: Durchmesser radiale Ausprägung/Stauchwulst
- *d_{I}*: Bohrungsgrunddurchmesser
- *d_{G}*: Durchmesser Bohrung
- *d_{E}*: Durchmesser Einschnürung
- *L_{S}*: Länge radiale Ausprägung
- *L_{D}*: Länge Dichtelement

## Patentansprüche

1. Dichtungsanordnung für eine Festlegung eines Anbauteils (3), insbesondere eines Drucksensors, an eine Kraftstoffhochdruckleitung (1), insbesondere eine Kraftstoffverteilerleiste einer Brennkraftmaschine, wobei das Anbauteil (3) einen Stutzen (7) aufweist, der einen radial umlaufenden und sich axial über eine Teilfläche erstreckenden Vorsprung (11) aufweist, wobei die Kraftstoffhochdruckleitung (1) eine Aufnahme (5) zur Festlegung des Anbauteiles (3) aufweist, wobei die Aufnahme (5) in einer Axialrichtung (A) zum Stutzen (7) des Anbauteiles (3) angeordnet ist, wobei zwischen dem Anbauteil (3) und der Aufnahme (5) ein ringförmiges Dichtelement (13) angeordnet ist, **dadurch gekennzeichnet, dass** das Dichtelement an seiner radial äußeren Ringfläche (17) zumindest teilweise an einer radial inneren Ringfläche (15) des Vorsprunges (11) des Stutzens (7) des Anbauteiles (3) anliegt, und das Dichtelement (13) zwischen der Aufnahme (5) und dem Stutzen (7) verpresst ist und sich der Durchmesser (*d_{K}*) der Aufnahme (5) in Axialrichtung (A) verringert, sodass der Vorsprung (11) plastisch verformt ist.

2. Dichtungsanordnung nach Anspruch 1, **dadurch gekennzeichnet, dass** das Dichtelement (13) weiter derart elastisch verformt ist, dass axiale Vorspannungen in das Dichtelement (13) induziert werden, die im Betrieb durch Pulsationen hervorgerufene Spannungsspitzen zumindest teilweise kompensieren.

3. Dichtungsanordnung nach Anspruch 1 oder 2, **dadurch gekennzeichnet, dass** der Stutzen (7) des Anbauteils (3) in seiner axialen Ausdehnung kürzer ist als die Aufnahme (5) an der Kraftstoffhochdruckleitung (1), und dass das Anbauteil (3) mit der Aufnahme (5) an der Kraftstoffhochdruckleitung (1) in Axialrichtung (A) verschraubbar ist, wobei das Anbauteil (3) ein Außengewinde (9) auf dem Stutzen (7) und die Aufnahme (5) der Kraftstoffhochdruckleitung (1) ein Innengewinde (19) aufweist.

4. Dichtungsanordnung nach einem der Ansprüche 1 bis 3, **dadurch gekennzeichnet, dass** sich das Außengewinde (9) nur über einen in Axialrichtung (A) oberen Teil des Stutzen (7) erstreckt.

5. Dichtungsanordnung nach einem der Ansprüche 1 bis 3, **dadurch gekennzeichnet, dass** der Stutzen (7) des Anbauteiles (3) an seinem in Axialrichtung (A) vorderen Ende eine radiale Ausprägung (23) aufweist, die zu dem Außengewinde (9) auf dem Stutzen (7) beabstandet ist, wobei die radiale Ausprägung (23) an dem den Durchmesser verringernden Teil der Aufnahme (5) an der Kraftstoffhochdruckleitung (1) gestaucht, insbesondere plastisch verformt ist und somit die koaxiale innere Ringfläche (15) des radialen Vorsprungs (23) des Stutzens (7) des Anbauteiles (3) das ringförmige Dichtungselement (13) an seiner radial äußeren Ringfläche abstützt.

6. Dichtungsanordnung nach einem der vorhergehenden Ansprüche, **dadurch gekennzeichnet, dass** die radiale Ausprägung (23) des in Axialrichtung (A) äußeren Endes des Stutzens (7) des Anbauteiles (3) zur Abstützung des Anbauteiles (3) als konische Fläche mit einem stumpfen Winkel zur Axialrichtung (A) ausgebildet ist.

7. Dichtungsanordnung nach einem der vorhergehenden Ansprüche, **dadurch gekennzeichnet, dass** die Zugfestigkeit der Aufnahme (5) an der Kraftstoffhochdruckleitung (1) größer ist als die Zugfestigkeit des Anbauteils (3).

8. Kraftstoffzuleitung (1) einer Brennkraftmaschine aufweisend eine Dichtungsanordnung nach einem der Ansprüche 1 bis 6.

## Claims

1. Seal arrangement for a fixing of an attachment component (3), in particular of a pressure sensor, to a high-pressure fuel line (1), in particular a fuel distributor rail of an internal combustion engine, wherein the attachment component (3) has a connector (7) which has a radially encircling projection (11) which extends axially over a partial area, wherein the high-pressure fuel line (1) has a receptacle (5) for the fixing of the attachment component (3), wherein the receptacle (5) is arranged in an axial direction (A) with respect to the connector (7) of the attachment component (3), wherein a ring-shaped sealing element (13) is arranged between the attachment component (3) and the receptacle (5), **characterized in that** the sealing element, at its radially outer ring-shaped surface (17), bears at least partially against a radially inner ring-shaped surface (15) of the projection (11) of the connector (7) of the attachment component (3), and the sealing element (13) is compressed between the receptacle (5) and the connector (7), and the diameter (d_{K}) of the receptacle (5) decreases in the axial direction (A), such that the projection (11) is plastically deformed.

2. Seal arrangement according to Claim 1, **characterized in that** the sealing element (13) is furthermore elastically deformed such that axial preloads are induced in the sealing element (13), which axial preloads at least partially compensate stress peaks caused by pulsations during operation.

3. Seal arrangement according to Claim 1 or 2, **characterized in that** the connector (7) of the attachment component (3) is shorter in terms of its axial extent than the receptacle (5) on the high-pressure fuel line (1), and **in that** the attachment component (3) can be screwed together with the receptacle (5) on the high-pressure fuel line (1) in the axial direction (A), wherein the attachment component (3) has an external thread (9) on the connector (7) and the receptacle (5) of the high-pressure fuel line (1) has an internal thread (19).

4. Seal arrangement according to one of Claims 1 to 3, **characterized in that** the external thread (9) extends only over an upper part, in the axial direction (A), of the connector (7).

5. Seal arrangement according to one of Claims 1 to 3, **characterized in that** the connector (7) of the attachment component (3) has, at its front end in the axial direction (A), a radial protuberance (23) which is spaced apart from the external thread (9) on the connector (7), wherein the radial protuberance (23) is upset, in particular plastically deformed, against the diameter-decreasing part of the receptacle (5) on the high-pressure fuel line (1), and thus the coaxial inner ring-shaped surface (15) of the radial projection (23) of the connector (7) of the attachment part (3) supports the ring-shaped seal element (13) at its radially outer ring-shaped surface.

6. Seal arrangement according to one of the preceding claims, **characterized in that** the radial protuberance (23) of the outer end, in the axial direction (A), of the connector (7) of the attachment component (3) is designed, for the purposes of supporting the attachment component (3), as a conical surface with an obtuse angle with respect to the axial direction (A).

7. Seal arrangement according to one of the preceding claims, **characterized in that** the tensile strength of the receptacle (5) on the high-pressure fuel line (1) is greater than the tensile strength of the attachment component (3).

8. Fuel feed line (1) of an internal combustion engine, having a seal arrangement according to one of Claims 1 to 6.

## Revendications

1. Agencement d'étanchéité pour la fixation d'un composant rapporté (3), en particulier d'un capteur de pression, à une conduite de carburant haute pression (1), en particulier une rampe de distribution de carburant d'un moteur à combustion interne, le composant rapporté (3) présentant une tubulure (7) qui présente une saillie radialement périphérique (11) s'étendant axialement sur une surface partielle, la conduite de carburant haute pression (1) présentant un logement (5) pour la fixation du composant rapporté (3), le logement (5) étant disposé dans une direction axiale (A) par rapport à la tubulure (7) du composant rapporté (3), un élément d'étanchéité de forme annulaire (13) étant disposé entre le composant rapporté (3) et le logement (5), **caractérisé en ce que** l'élément d'étanchéité, au niveau de sa surface annulaire radialement extérieure (17), s'applique au moins en partie contre une surface annulaire radialement intérieure (15) de la saillie (11) de la tubulure (7) du composant rapporté (3), et l'élément d'étanchéité (13) est pressé entre le logement (5) et la tubulure (7) et le diamètre (d_{K}) du logement (5) diminue dans la direction axiale (A), de telle sorte que la saillie (11) se déforme plastiquement.

2. Agencement d'étanchéité selon la revendication 1, **caractérisé en ce que** l'élément d'étanchéité (13) se déforme en outre élastiquement de telle sorte que des précontraintes axiales soient induites dans l'élément d'étanchéité (13), lesquelles compensent au moins en partie les pics de contraintes provoqués par des pulsations pendant le fonctionnement.

3. Agencement d'étanchéité selon la revendication 1 ou 2, **caractérisé en ce que** la tubulure (7) du composant rapporté (3) présente une étendue axiale plus courte que le logement (5) au niveau de la conduite de carburant haute pression (1), et **en ce que** le composant rapporté (3) peut être vissé dans la direction axiale (A) au logement (5) au niveau de la conduite de carburant haute pression (1), le composant rapporté (3) présentant un filetage extérieur (9) sur la tubulure (7) et le logement (5) de la conduite de carburant haute pression (1) présentant un filetage intérieur (19).

4. Agencement d'étanchéité selon l'une quelconque des revendications 1 à 3, **caractérisé en ce que** le filetage extérieur (9) ne s'étend que sur une partie supérieure, dans la direction axiale (A), de la tubulure (7).

5. Agencement d'étanchéité selon l'une quelconque des revendications 1 à 3, **caractérisé en ce que** la tubulure (7) du composant rapporté (3) présente, au niveau de son extrémité avant dans la direction axiale (A), une formation en relief (23) qui est espacée par rapport au filetage extérieur (9) sur la tubulure (7), la formation en relief (23), au niveau de la partie de diamètre réduit du logement (5), étant comprimée contre la conduite de carburant haute pression (1), en particulier étant déformée plastiquement, et de ce fait la surface annulaire intérieure coaxiale (15) de la saillie radiale (23) de la tubulure (7) du composant rapporté (3) supportant l'élément d'étanchéité annulaire (13) contre sa surface annulaire radialement extérieure.

6. Agencement d'étanchéité selon l'une quelconque des revendications précédentes, **caractérisé en ce que** la formation radiale en relief (23) de l'extrémité extérieure, dans la direction axiale (A), de la tubulure (7) du composant rapporté (3) est réalisée sous forme de surface conique avec un angle obtus par rapport à la direction axiale (A) pour supporter le composant rapporté (3).

7. Agencement d'étanchéité selon l'une quelconque des revendications précédentes, **caractérisé en ce que** la résistance à la traction du logement (5) au niveau de la conduite de carburant haute pression (1) est supérieure à la résistance à la traction du composant rapporté (3).

8. Conduite d'alimentation en carburant (1) d'un moteur à combustion interne présentant un agencement d'étanchéité selon l'une quelconque des revendications 1 à 6.
